# EUROPÄISCHE PATENTSCHRIFT

(11) **EP 3 035 137 B1**
(45) Veröffentlichungstag und Bekanntmachung des Hinweises auf die Patenterteilung: **24.06.2020**
(21) Anmeldenummer: 14198934.3
(22) Anmeldetag: 18.12.2014
(51) Int. Cl.: G05B 11/36, G05B 11/40, G05B 11/42

(54) **Reglerbaustein zur Verwendung in einer industriellen Automatisierungsanordnung**
Regulator module for use in an industrial automation assembly
Composant de régulateur destiné à être utilisé dans un Système d'automatisation industrielle

(43) Veröffentlichungstag der Anmeldung: 22.06.2016
(73) Patentinhaber: Siemens Aktiengesellschaft, 80333 München (DE)
(72) Erfinder: Jahn, Uwe, 09126 Chemnitz (DE); Mantel, Martin, 91452 Wilhermsdorf (DE); Martin, Christian, 91054 Erlangen (DE); Müller, Georg, 09669 Frankenberg (DE); Vogel, Thomas, 09217 Burgstädt (DE)

(56) Entgegenhaltungen:
- US-A- 5 504 672
- "ISaGRAF", 20060201, Nr. 5.0, 1. Februar 2006 (2006-02-01), Seiten 1-942, XP007922142,
- Anonymous: "Features of practical PID controllers", , 22. Januar 2013 (2013-01-22), XP055171692, Gefunden im Internet: URL:http://www.online-courses.vissim.us/St rathclyde/features_of_practical_pid_contro .htm#Controller%20Output%20Constraints%20a nd%20Integral%20Windup [gefunden am 2015-02-24] & Anonymous: "Features of practical PID controllers", , 22. Januar 2013 (2013-01-22), XP055171684, Gefunden im Internet: URL:http://web.archive.org/web/20130122234 630/http://www.online-courses.vissim.us/St rathclyde/features_of_practical_pid_contro .htm [gefunden am 2015-02-24]

## Beschreibung

Die Erfindung betrifft einen Reglerbaustein zur Verwendung in einer industriellen Automatisierungsanordnung gemäß dem Oberbegriff des Patentanspruchs 1.

Ein einfacher Regelkreis besteht aus einem Regler und einer Regelstrecke. Die Regelgröße (Ausgangsgröße der Regelstrecke) wird gemessen und dem Regler als Istwert zugeführt. Aus der Differenz zwischen Sollwert und Istwert wird im Regler ein Stellwert berechnet, der auf die Strecke wirkt (Eingangsgröße der Regelstrecke).

Lässt sich die Regelstrecke in Teilstrecken unterteilen, können neben der Regelgröße zusätzliche Hilfsgrößen gemessen werden, die auf die Regelgröße wirken. Dabei kann mit einer Kaskadenregelung unter Einsatz mehrerer Regler meist ein besseres Regelverhalten erzielt werden, als das mit der einfachen einschleifigen Regelung möglich ist. Bei einer Kaskadenregelung werden dabei so viele Regler eingesetzt, wie verkettete Größen im Prozess messbar sind. Jede Größe wird einem Regler als Istwert zugeführt. Der Stellwertausgang eines Reglers (Führungsregler / Master) wird als Sollwert an den nächsten unterlagerten Regler (Folgeregler / Slave) weitergegeben. Nur der innerste Folgeregler wirkt mit seinem Stellwert direkt auf die Regelstrecke. Die Sollwertvorgabe erfolgt am äußersten Führungsregler. In speziellen Fällen können dabei auch Kaskadenregelungen zum Einsatz kommen, in denen ein Führungsregler mehrere parallele Folgeregler ansteuert z.B. wenn mehrere Stellglieder vorhanden sind.

Beim praktischen Einsatz einer Kaskadenregelung ergeben sich aus dieser Verschaltung mehrerer Regler Probleme.

Durch einen außergewöhnlichen Zustand im Folgeregler kann im Führungsregler ein integraler Anteil (I-Anteil) extreme Werte annehmen; dies ist als "Wind-Up Effekt" bekannt. Dies kann auftreten, wenn beispielsweise an einem Führungsregler eine Regeldifferenz ansteht (Sollwert ungleich Istwert) und der Regelalgorithmus dieses Führungsreglers einen Integral-Anteil (I-Anteil) enthält. Dabei wird der Stellwert dieses Führungsreglers und damit der Sollwert des Folgereglers solange verändert (erhöht oder verringert je nach Vorzeichen der Regeldifferenz) bis die Regeldifferenz ausgeglichen ist. In einigen Fällen kann der Folgeregler jedoch nicht mehr auf Veränderungen seines Sollwerts (durch den Führungsregler) reagieren:
Fall A.1) Der Folgeregler hat den minimalen oder maximalen Stellwert erreicht.
Fall A.2) Der Folgeregler befindet sich in einer anderen Betriebsart als Regelbetrieb z.B. im Handbetrieb (Ausgabe eines festen Handstellwertes, der vom Anwender vorgegeben wird).
Fall A.3) Der Folgeregler arbeitet nicht mit der Sollwertvorgabe des Führungsreglers, sondern mit einem alternativen Sollwert der an einem zusätzlichen Eingangsparameter vorgegeben werden kann.

Steht die Regeldifferenz am Führungsregler in einem dieser Fälle weiterhin an, werden durch den I-Anteil der Stellwert und damit der Sollwert des Folgereglers aber weiterhin verändert, so dass die oben genannte "Wind-up"-Situation eintritt. Erst eine Regeldifferenz mit umgekehrten Vorzeichen kann den angesammelten I-Anteil wieder abbauen. Dieser Abbau des I-Anteils benötigt jedoch Zeit. In dieser Zeit erhält der Folgeregler einen durch den angesammelten I-Anteil beeinflussten Sollwert und wenn keiner der Fälle A.1) bis A.3) mehr vorliegt wirkt sich dieser Sollwert über die Berechnung des Folgeregler-Stellwertes dann auch auf die Regelstrecke aus. Dadurch wird das Regelverhalten verschlechtert.

Auch bei Kaskadenregelungen, bei denen ein Führungsregler mehrere parallele Folgeregler ansteuert tritt das beschriebene Problem des Wind-Up-Effekts auf.

Diese Probleme werden im Stand der Technik bei Einsatz einer Kaskadenregelung in Automatisierungssystemen bisher gelöst, indem über zusätzliche Logik und Verschaltungen im Programmcode zunächst ausgewertet wird, ob einer der oben genannten Fälle A.1) bis A.3) eingetreten ist. Ist dies der Fall, wird über eine Verschaltung mit dem Führungsregler dessen Integral-Anteil angehalten, die Veränderungsgeschwindigkeit reduziert oder auf einen bestimmten Wert nachgeführt. Bei den bekannten industriellen Reglern erfordern die geschilderten Maßnahmen jedoch einen hohen Programmieraufwand und entsprechend tiefergehende Fachkenntnisse des Programmierers.

Ähnliche Probleme wie der genannte "Wind-up" treten auch bei einer Auftrennung der Reglerkaskade - später als "Problem B" bezeichnet - auf, die bei anderen Betriebsarten als dem Regelbetrieb oder durch Vorgabe alternativer Sollwerte an zumindest einem der Regler gegeben ist. Viele Regler, die in Automatisierungssystemen eingesetzt werden, bieten nämlich neben dem reinen Regelbetrieb zusätzliche Betriebsarten wie Handbetrieb oder einen Optimierungsmodus zur automatischen Einstellung der Regelparameter. Da der Stellwert in diesen zusätzlichen Betriebsarten nicht vom Regelalgorithmus berechnet, sondern auf andere Weise vorgegeben wird, wirkt sich auch der aktuelle Sollwert nicht auf den Stellwert aus. Damit ein Führungsregler in Regelbetrieb, Handbetrieb oder während einer Optimierung auf die Regelstrecke wirken kann, müssen sich dennoch alle unterlagerten Folgeregler im Regelbetrieb befinden. Ist dies nicht der Fall, ist seine Stellwertausgabe nicht mehr wirksam, d.h. die Reglerkaskade ist aufgetrennt und der gewünschte Sollwert kann im Regelbetrieb nicht erreicht werden bzw. der "Handwert" wird im Handbetrieb nicht an die Strecke weitergegeben bzw. die Optimierung kann nicht durchgeführt werden.

Weiter verfügen viele Reglersysteme über die Möglichkeit, an zusätzlichen Eingängen alternative Sollwerte vorzugeben. So kann zwischen der Sollwertvorgabe durch den Führungsregler und einer alternativen Sollwertvorgabe gewechselt werden. Wird an einem der Folgeregler ein alternativer Sollwert verwendet, ist die Stellwertausgabe des Führungsreglers nicht mehr wirksam, d.h., die Reglerkaskade ist aufgetrennt und der Führungsregler wirkt nicht auf die Regelstrecke.

Bei Einsatz einer Kaskadenregelung in Automatisierungssystemen wird auch dieses Problem bisher über zusätzliche Logik und Verschaltungen im Programmcode gelöst. Dabei wird über zusätzlichen Programmcode ausgewertet, ob alle unterlagerten Folgeregler im Regelbetrieb arbeiten bzw. keine alternativen Sollwerte verwendet werden und die Reglerkaskade somit geschlossen ist. Ist dies nicht der Fall, wird über zusätzlichen Programmcode die gewünschte Reaktion ausgelöst, wie z.B. Ausgabe einer Warnmeldung oder eine Betriebsartenumschaltung am Führungsregler. Die Lösung des Problems bleibt dabei dem Anwender überlassen. Der nötige Programmcode ist mit entsprechendem Aufwand selbst zu erstellen, was entsprechendes Fachwissen erfordert.

Die Druckschrift "ISaGRAF", 20060201, Nr. 5.0, 1. Februar 2006, zeigt einen Reglerbaustein "Smart PID Function Block" mit einer Anzahl von Schnittstellen zu einem weiteren Reglerbaustein.

Es ist daher eine Aufgabe der vorliegenden Erfindung, die Programmierung einer Kaskade mit mehreren Reglern zu vereinfachen und dabei insbesondere Reglerbausteine vorzuschlagen, die eine einfache und betriebssichere Programmierung einer Reglerkaskade unterstützen.

Es ist eine Kernidee der erfindungsgemäßen Lösung dieser Aufgabe, den Informationsaustausch zwischen Führungsregler und Folgeregler durch nur eine universelle Schnittstelle in Form von zwei Durchgangsparametern zu vereinfachen. Zwischen Führungsregler und Folgeregler muss dazu also nur eine Verbindung programmiert werden. In einem Konfigurationsbit oder einer ähnlichen Einstellung des jeweiligen Reglers wird angegeben, ob es sich bei dem jeweiligen Regler um einen Führungsregler, oder einen Folgeregler, oder einen Regler handelt, der zugleich Führungsregler für einen anderen Regler und Folgeregler eines weiteren Reglers ist. Über eine Verbindung zwischen den jeweiligen Schnittstellen tauscht der Führungsregler mit dem Folgeregler sowohl Informationen zur Stellwertbegrenzung als auch zur aktuellen Betriebsart und Verwendung des Sollwerts aus.

Die Aufgabe wird insbesondere durch einen Reglerbaustein gemäß Patentanspruch 1 gelöst.

Dabei wird ein Reglerbaustein zur Verwendung in einer industriellen Automatisierungsanordnung vorgeschlagen, wobei der Reglerbaustein zur Verwendung mit einer Anzahl gleichartiger oder im Wesentlichen funktionsgleicher Reglerbausteine in einer kaskadierten Regelung eingerichtet ist, und wobei der Reglerbaustein wahlweise als Führungsregler, als Folgeregler, oder als Führungs- und Folgeregler im Zusammenwirken mit anderen Reglern der kaskadierten Regelung konfigurierbar ist. Dabei weist der Reglerbaustein eine Datenschnittstelle zur Kommunikation mit anderen Reglerbausteinen auf, wobei die Datenschnittstelle zumindest für den Austausch von Informationen über eine Stellwertbegrenzung und eine aktuelle Betriebsart zur Laufzeit der Regelung eingerichtet ist. Diese Lösung mit einer Datenschnittstelle mit nur einer Verbindung zum Informationsaustausch zwischen Führungsregler und Folgeregler stellt sich für den Anwender einfacher dar, als bisher vorhandene Lösungen, wo mehrere Verbindungen und je nach eingesetztem Produkt auch zusätzliche Logik programmiert werden muss.

Erfindungsgemäß ist die Datenschnittstelle weiter für den Austausch von Informationen über die Art des aktuell verwendeten Sollwerts eingerichtet. Damit ist es möglich, auf eine Betriebsart automatisch zu reagieren, bei der ein alternativer Sollwert beispielsweise manuell vorgegeben wird. Vorteilhaft wird dann im Führungsregler dies berücksichtigt, indem beispielsweise der I-Anteil des dortigen Reglers temporär nicht weiter angepasst wird.

Vorteilhafte Ausgestaltungen des erfindungsgemäßen Reglerbausteins sind in den abhängigen Patentansprüchen angegeben. Die Merkmale dieser Ausgestaltungen können sowohl einzeln, als auch in Kombination miteinander realisiert werden.

Eine breite Anwendbarkeit ergibt sich, wenn der Reglerbaustein ein Software-Baustein zur Programmierung einer industriellen Steuerung mittels eines Engineeringsystems ist. Alternativ kann ein solcher Regler auch als separate Hardware-Einheit ausgeführt sein, wobei es auch möglich ist, mittels der definierten Schnittstelle Hardware-Regler und Software-Regler miteinander zu kombinieren.

Vorteilhaft weist der Reglerbaustein eine visuelle Repräsentation für eine graphische Benutzeroberfläche eines Engineeringsystems auf, wobei die visuelle Repräsentation Elemente zur Konfigurierung des Reglerbausteins als Führungsregler, als Folgeregler, oder als Führungs- und Folgeregler und zumindest eine Auswahlmöglichkeit zur Auswahl eines mit dem Reglerbaustein verknüpften weiteren Reglerbausteins aufweist. Somit kann eine Regler-Kaskade oder eine ähnliche Verschaltung mehrerer Regler schnell und einfach projektiert und konfiguriert werden. Weiter kann die visuelle Repräsentation vorteilhaft zumindest eine Verknüpfungsmöglichkeit mit Prozessparametern eines industriellen Prozesses aufweisen, so dass der Reglerbaustein einfach in das industrielle Umfeld eingebunden werden kann.

Vorteilhaft wird bei der Information über die aktuelle Betriebsart zumindest zwischen einem Regelbetrieb, und einem manuellem Betrieb unterschieden, was ein "Wind-up" und andere Nachteile im Falle des manuellen Betriebs eines Folgereglers verhindern kann. Dabei kann bei der Information über die aktuelle Betriebsart vorteilhaft auch ein Parametrierungsbetrieb vorgesehen sein, so dass die beteiligten Regler automatisch die Voraussetzungen für die automatisehe Parametrierung eines der Regler schaffen; vorteilhaft umfasst das Protokoll der Schnittstelle auch die Möglichkeit, die zu parametrierende Regler-Komponente zu identifizieren und/oder die für die Parametrierung erforderlichen Anweisungen und Parameter auszutauschen.

In einer weiteren vorteilhaften Ausgestaltung wird bei der Information über die Art des aktuell verwendeten Sollwerts zumindest zwischen einem Betrieb mit einem durch einen Führungsregler vorgegebenen Sollwert und einem Betrieb mit einem alternativ vorgegebenem Sollwert unterschieden. Dadurch werden ungewünschte Effekte vermieden, analog zu der Unterscheidung zwischen manuellem und automatischem Betrieb.

Ausführungsbeispiele eines erfindungsgemäßen Reglerbausteins werden nachfolgend anhand der Zeichnungen erläutert.

Dabei zeigen:
- Figur 1: in schematischer Darstellung eine kaskadierte Regelstrecke mit drei kaskadierten Reglern,
- Figur 2: einen Benutzerdialog eines Engineeringsystems zur Konfigurierung des ersten Reglers der Reglerkaskade,
- Figur 3: einen Benutzerdialog eines Engineeringsystems zur Konfigurierung des zweiten Reglers der Reglerkaskade,
- Figur 4: einen Benutzerdialog eines Engineeringsystems zur Konfigurierung des dritten Reglers der Reglerkaskade, und
- Figur 5: Blockschaltbilder der Regler mit dem Informationsfluß mittels der erfindungsgemäßen Schnittstellen.

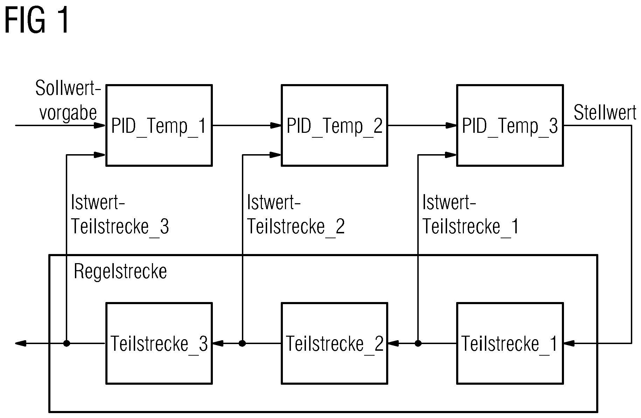

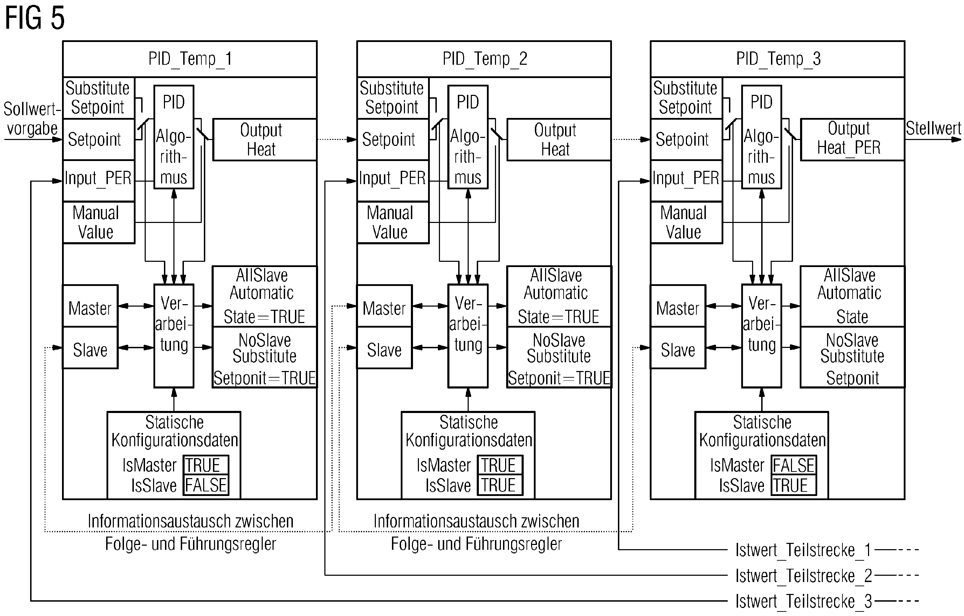

In der Figur 1 ist eine Regelstrecke mit 3 Teil-Regelstrecken Teilstrecke_1, Teilstrecke_2, Teilstrecke_3 und den zugehörigen kaskadierten Reglern PID-Temp_1, PID_Temp_2, PID_Temp_3 (Reglerbausteine) dargestellt. Die nachfolgenden Figuren, insbesondere Figur 5, basieren auf der hier dargestellten Struktur, wobei in den nachfolgenden Figuren die Regelstrecke nicht mehr abgebildet ist.

Die kaskadierten Regler PID_Temp_1, PID_Temp_2, PID_Temp_3 (Reglerbausteine) werden mit einem Engineeringsystem für den kaskadierten betrieb konfiguriert.

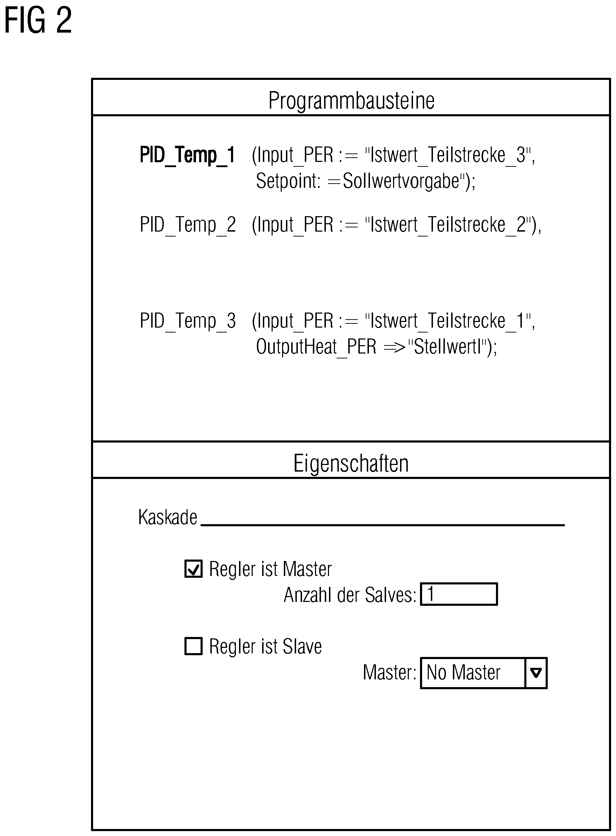

In den Figuren 2 bis 4 sind dazu die visuellen Dialoge der graphischen Benutzeroberfläche gezeigt; aus Gründen der Übersichtlichkeit sind andere Elemente der Benutzeroberfläche nicht dargestellt. Dabei sind im oberen Fenster jeweils die 3 kaskadierten Regler PID_Temp_1, PID_Temp_2, PID_Temp_3 und deren Verknüpfung mit den Programmvariablen Istwert_Teilstrecke_1, Istwert_Teilstrecke_2, Istwert_Teilstrecke_3, Stellwert, Sollwertvorgabe dargestellt, während im Eigenschaften-Fenster die jeweilige Betriebsart und die Bezüge hinsichtlich Folgeregler "Slave" und Führungsregler "Master" eingebbar sind.

In der Figur 2 ist dargestellt, dass der äußere Regler PID_Temp_1, der im Programmbausteine-Fenster markiert ist ("highlighted" oder mittels Fettdruck), als Führungsregler (Master) konfiguriert ist. Entsprechend wird die Schnittstelle dieses Reglers PID_Temp_1 durch das Engineeringsystem im Hintergrund vorbereitet; dies ist für den Benutzer nicht sichtbar.

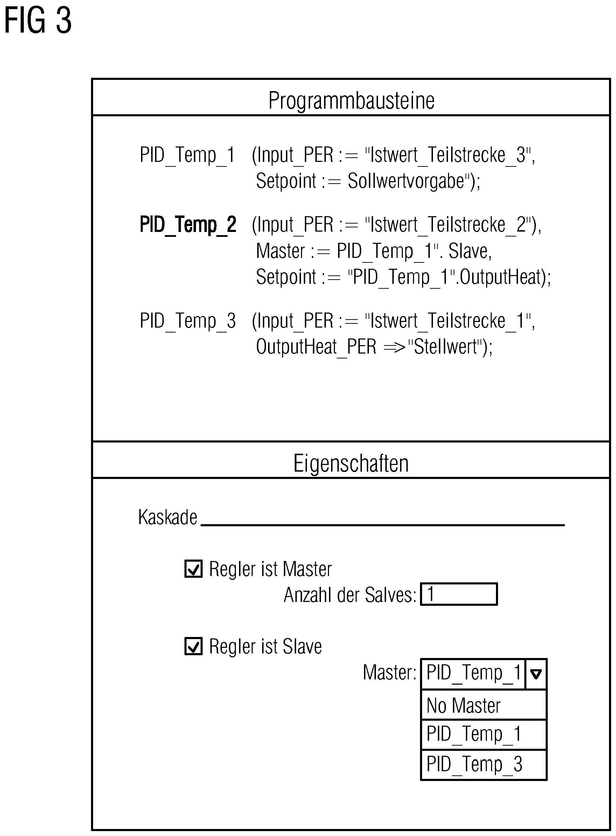

In der Figur 3 ist zu sehen, wie der mittlere Regler PID_Temp_2 (hier jetzt "highlighted" oder mittels Fettdruck markiert) als Führungsregler / Master und zugleich als Folgeregler / Slave konfiguriert wird und nach Spezifizierung des zugehörigen Führungsreglers PID_Temp_1 als "Master" vom System automatisch mit seinem Führungsregler (PID_Temp_1) verschaltet wird. Die Verbindung zwischen dem Stellwert des Führungsreglers (PID_Temp_1) und Sollwert des Folgereglers (PID_Temp_2) wird dabei also automatisch hergestellt; dies ist an den Zuweisungen der entsprechenden Variablen im Programmbausteine-Fenster im Block "PID_Temp_2" zu sehen. Auch die Verbindung zum Informationsaustausch zwischen Führungsregler (PID_Temp_1) und Folgeregler (PID_Temp_2) in Bezug auf den jeweiligen Betriebszustand etc. wird im Hintergrund automatisch hergestellt, was bedeutet, dass die erfindungsgemäßen Schnittstellen im Hintergrund automatisch miteinander verknüpft werden.

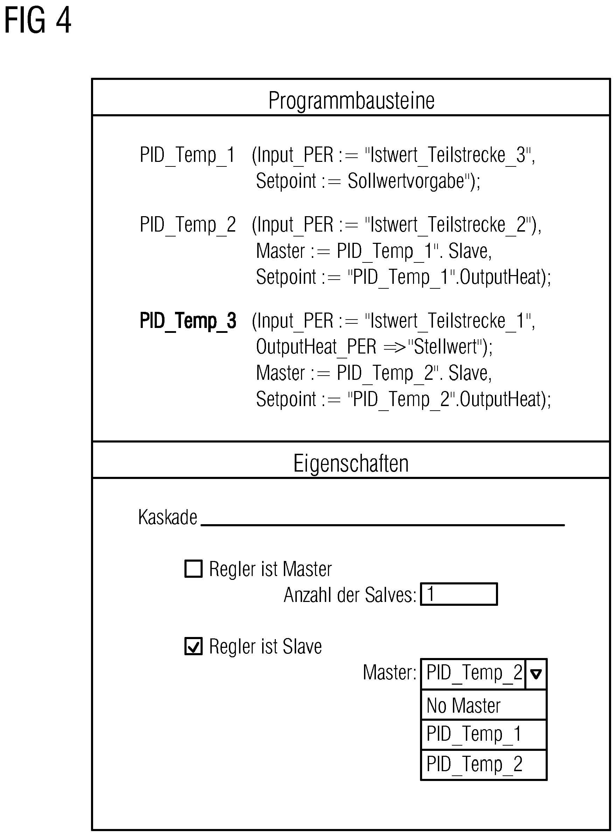

In der Figur 4 ist dargestellt, dass der innere Regler PID_Temp_3, der hier im Programmbausteine-Fenster markiert ist ("highlighted" oder mittels Fettdruck), als Folgeregler (Slave) konfiguriert ist; der Benutzer gibt dazu im Eigenschaften-Fenster den Regler PID_Temp_2 als zugehörigen Führungsregler (Master) an. Dadurch wird die automatische Verschaltung des innersten Folgereglers PID_Temp_3 mit seinem Führungsregler PID_Temp_2 initiiert. Die Verbindung zwischen Stellwert des Führungsreglers (PID_Temp_2) und Sollwert des Folgereglers (PID_Temp_3) wird automatisch hergestellt; dies ist im Programmbausteine-Fenster anhand der Zuweisungen der entsprechenden Variablen sichtbar. Auch die Verbindung zum Informationsaustausch zwischen Führungsregler (PID_Temp_2) und Folgeregler (PID_Temp_3) mittels der erfindungsgemäßen Schnittstellen wird im Hintergrund automatisch hergestellt.

Damit sind die Regler (Reglerbausteine) Regler PID_Temp_1, PID_Temp_2, PID_Temp_3 als Reglerkaskade konfiguriert, wobei gleichzeitig die Regler so miteinander verschaltet sind, dass die Randbedingungen, die zu einem "Wind up" und anderen ungewünschten Systemzuständen führen können, erkannt werden können, und solche Zustände vermieden werden können.

In der Figur 5 ist ein schematisches Blockschaltbild der anhand der zuvor geschilderten Konfigurationen eingerichteten Kaskade mit den Reglern PID_Temp_1, PID_Temp_2, PID_Temp_3 dargestellt.

Dabei bedeuten:
- SubstituteSetpoint: alternativer Sollwerteingang
- Setpoint: Sollwerteingang
- Input_PER: Istwerteingang
- ManualValue: Handwerteingang für Handbetrieb
- Master / Slave: Schnittstelle zum Informationsaustausch zwischen Folge- und Führungsregler
- OutputHeat: Stellwertausgang im Gleitpunktformat
- OutputHeat_PER: Stellwertausgang im Peripherie / Analogformat
- AllSlaveAutomaticState: Bit zeigt an, ob alle unterlagerten Folgeregler im Regelbetrieb arbeiten
- NoSlaveSubstituteSetpoint: Bit zeigt an, ob alle unterlagerten Folgeregler den Sollwert, der von ihrem Führungsregler vorgegeben wird, verwenden
- IsMaster: Dieses Bit ist TRUE, wenn dieser Regler als Führungsregler verwendet wird (Konfigurationsbit)
- IsSlave: Dieses Bit ist TRUE, wenn dieser Regler als Folgeregler verwendet wird (Konfigurationsbit)

Die als gepunktete Linien dargestellten Verbindungen können über die Programmierunterstützung automatisch angelegt werden und verbinden die erfindungsgemäßen Schnittstellen der Reglerbausteine PID_Temp_1, PID_Temp_2, PID_Temp_3 miteinander.

Im Folgenden soll exemplarisch auf das bereits oben erwähnte Problem "Fall A.1)" eingegangen werden, bei dem der Folgeregler PID_Temp_2 den maximalen Stellwert erreicht hat, also die Ausgangsvariable OutputHeat des Reglers PID_Temp_2 einen Maximalwert erreicht hat. Eine weitere Erhöhung des Eingangswertes Setpoint dieses Reglers PID_Temp_2 wäre sinnlos, dennoch würde diese Situation dazu führen, dass ein I-Anteil (I-Variable) des Reglers PID_Temp_1 weiter ansteigt ("Wind up"), was bei Erreichen des Regelungszieles (Istwert_Teilstrecke_3 = Sollwertvorgabe) zu einer verlangsamten Reaktion des Reglers PID_Temp_1 und somit vermutlich zu einem "Überschwingen" führen würde.

Mit Erreichen des maximalen Stellwerts (Ausgangsvariable OutputHeat des Reglers PID_Temp_2 erreicht einen Maximalwert) informiert der Block "PID-Algorithmus" dieses Reglers PID_Temp_2 den Block "Verarbeitung" desselben Reglers PID_Temp_2 darüber. Der Block "Verarbeitung" des Reglers PID_Temp_2 gibt diese Information über den Kanal "Master" seiner Schnittstelle an den Kanal "Slave" des Reglers PID_Temp_1 weiter, wonach dessen Verarbeitungseinheit mittels eines Befehls oder eines Flags oder dgl. den Block "PID-Algorithmus" des Reglers PID_Temp_2 dazu konfiguriert, seinen I-Anteil (Integral-Anteil) zu drosseln oder zumindest nicht weiter zu verändern. Somit wird ein "Wind up" des Reglers PID_Temp_1 verhindert.

Analog dazu kann eine Kommunikation über die erfindungsgemäßen Schnittstellen auch andere Situationen beherrschbar machen, z.B. einen manuellen Betrieb einzelner Regler berücksichtigen, ohne dass ein Benutzer dazu explizit Programmcode oder Datenverbindungen etablieren muss.

Für das oben genannte Problem A.) kann die Behandlung des I-Anteils des Führungsreglers bei
- Fall A.1) Stellwertbegrenzung, oder
- Fall A.2) anderer Betriebsart als Regelbetrieb, oder
- Fall A.3) Verwendung eines alternativen Sollwerts
also vom Anwender konfiguriert werden, wobei die Reglerbausteine auf Standard-Reaktionen vorkonfiguriert sind, von denen nach Benutzerwunsch abgewichen werden kann. Möglich sind dabei beispielsweise folgende Reaktionen:
- Keine Reaktion
- Integral-Anteil anhalten
- Zuwachs des Integral-Anteils drosseln.

Durch diese Behandlung des I-Anteils wird der "Wind-Up"-Effekt und seine negativen Auswirkungen auf das Regelverhalten verhindert oder abgemildert.

Die erfindungsgemäßen Reglerbausteine unterstützen neben der Standard-Ausführung einer Kaskadenregelung (ein Folgeregler pro Führungsregler) auch Kaskadenregelungen, bei denen mehrere Folgeregler von einem Führungsregler angesteuert werden. Die implementierte Lösung für Problem / Fall A.) funktioniert auch hier. Dazu muss dem Führungsregler nur über einen Konfigurationswert mitgeteilt werden, wie viele Folgeregler er ansteuert.

Für "Problem B" (Auftrennung der Reglerkaskade) stellen die erfindungsgemäßen Reglerbausteine zur Erkennung, ob die Reglerkaskade geschlossen ist, zwei Status-Bits zur Verfügung. Ein Bit zeigt dabei an, ob alle unterlagerten Folgeregler im Regelbetrieb arbeiten. Ein weiteres Bit zeigt an, ob alle unterlagerten Folgeregler den Sollwert, der von ihrem Führungsregler vorgegeben wird, verwenden. Diese Status-Bits können auf einfache Weise zur Programmierung anwendungsspezifischer Reaktionen auf eine nicht geschlossene Reglerkaskade verwendet werden.

Versucht der Anwender, einen automatischen Optimierungsdurchlauf (automatische Parametrierung, beispielsweise durch Schwingungsversuch oder Sprungantwort-Methode) an einem Führungsregler zu starten, und wird in diesem Führungsregler anhand des Informationsaustausches mit seinen Folgereglern erkannt, dass die Reglerkaskade nicht geschlossen ist, so wird die Optimierung schon beim Start mit einer entsprechenden Fehlermeldung abgebrochen. Der Anwender erhält somit eine direkte Rückmeldung, aus welchem Grund die Optimierung nicht durchgeführt werden konnte, und wie er dieses Problem beheben kann.

In einer weiteren vorteilhaften Ausgestaltung wird die Anwendung dieser Schnittstelle um die Information, ob alle unterlagerten Folgeregler eines Führungsreglers bereits mit optimierten Regelparametern arbeiten, erweitert. Dies ist für den Anwender interessant, da Inbetriebnahme und Optimierung einer Reglerkaskade aus Sicht der Systemtheorie "von innen nach außen" erfolgen soll, d.h., man startet beim innersten Folgeregler und arbeitet sich in Richtung des äußersten Führungsreglers durch. Daher ist es sinnvoll, vor der Optimierung eines Führungsreglers zu prüfen, ob alle unterlagerten Folgeregler bereits optimiert sind.

Die hier vorgestellte Lösung mit nur einer Verbindung zum Informationsaustausch zwischen Führungsregler und Folgeregler stellt sich für den Anwender einfacher dar, als bisher vorhandene Lösungen, wo mehrere Verbindungen und je nach eingesetztem Produkt auch zusätzliche Logik programmiert werden muss.

Um die Anwendung der hier dargestellten Reglerbausteine für den Anwender noch weiter zu vereinfachen, bietet ein verwendetes Engineeringsystem vorteilhaft eine Programmierunterstützung für das Herstellen der Verbindung zwischen Führungsregler und Folgeregler an. Der Anwender muss bei der Programmierung des Bausteinaufrufs der Reglerbausteine als Folgeregler nur noch angeben, welche andere Regler-Instanz als Führungsregler verwendet wird. Die Verbindung zwischen Führungsregler und Folgeregler wird dann automatisch etabliert.

Der Programmieraufwand reduziert sich für den Anwender auf die Erstellung einer Verbindung zwischen Führungsregler und Folgeregler, sowie auf das Setzen der Konfigurationsbits, um die oben genannten Probleme zu lösen.

Bisher vorhandene Lösungen betrachten jeweils ein spezielles Problem einzeln, und der Programmieraufwand zur Lösung fällt höher aus. Neben Verbindungen muss oft auch noch zusätzliche Logik in den Programmcode eingefügt werden. Deshalb reduziert die hier vorgestellte Lösung die Anfälligkeit für Fehler und die Kosten zur Umsetzung. Durch den Einsatz der erfindungsgemäßen Schnittstellen ergibt sich ein geringerer Programmieraufwand, sowohl quantitiv, als auch hinsichtlich der vorausgesetzten Programmierkenntnisse.

## Patentansprüche

1. Reglerbaustein (PID_Temp_1, PID_Temp_2, PID_Temp_3) zur Verwendung in einer industriellen Automatisierungsanordnung, wobei der Reglerbaustein (PID_Temp_1, PID_Temp_2, PID_Temp_3) zur Verwendung mit einer Anzahl gleichartiger oder im Wesentlichen funktionsgleicher Reglerbausteine (PID_Temp_1, PID_Temp_2, PID_Temp_3) in einer kaskadierten Regelung eingerichtet ist, und
wobei der Reglerbaustein (PID_Temp_1, PID_Temp_2, PID_Temp_3) wahlweise als Führungsregler, als Folgeregler, oder als Führungs- und Folgeregler im Zusammenwirken mit anderen Reglern der kaskadierten Regelung konfigurierbar ist,
**dadurch gekennzeichnet,**
**dass** der Reglerbaustein (PID_Temp_1, PID_Temp_2, PID_Temp_3) eine Datenschnittstelle zur Kommunikation mit anderen Reglerbausteinen (PID_Temp_1, PID_Temp_2, PID_Temp_3) aufweist,
wobei die Datenschnittstelle zumindest für den Austausch von Informationen über
• eine Stellwertbegrenzung,
• eine aktuelle Betriebsart, und
• die Art des aktuell verwendeten Sollwerts zur Laufzeit der Regelung eingerichtet ist,
wobei abhängig von den Informationen eine Drosselung des Zuwachses oder ein Anhalten eines Integral-Anteils der Regelparameter des Reglerbausteins vorgesehen ist.

2. Reglerbaustein nach einem der vorhergehenden Patentansprüche,
**dadurch gekennzeichnet,**
**dass** der Reglerbaustein (PID_Temp_1, PID_Temp_2, PID_Temp_3) ein Software-Baustein zur Programmierung einer industriellen Steuerung mittels eines Engineeringsystems ist.

3. Reglerbaustein nach einem der vorhergehenden Patentansprüche,
**dadurch gekennzeichnet,**
**dass** der Reglerbaustein (PID_Temp_1, PID_Temp_2, PID_Temp_3) eine visuelle Repräsentation für eine graphische Benutzeroberfläche eines Engineeringsystems aufweist, wobei die visuelle Repräsentation Elemente zur Konfigurierung des Reglerbausteins (PID_Temp_1, PID_Temp_2, PID_Temp_3)
• als Führungsregler,
• als Folgeregler, oder
• als Führungs- und Folgeregler
und zumindest eine Auswahlmöglichkeit zur Auswahl eines mit dem Reglerbaustein (PID_Temp_1, PID_Temp_2, PID_Temp_3) verknüpften weiteren Reglerbausteins (PID_Temp_1, PID_Temp_2, PID_Temp_3) aufweist.

4. Reglerbaustein nach Patentanspruch 3,
**dadurch gekennzeichnet,**
**dass** die visuelle Repräsentation zumindest eine Verknüpfungsmöglichkeit mit Prozessparametern eines industriellen Prozesses aufweist.

5. Reglerbaustein nach einem der vorhergehenden Patentansprüche,
**dadurch gekennzeichnet,**
**dass** bei der Information über die aktuelle Betriebsart zumindest
• ein Regelbetrieb, und
• ein manueller Betrieb
unterscheidbar ist.

6. Reglerbaustein nach Patentanspruch 5,
**dadurch gekennzeichnet,**
**dass** bei der Information über die aktuelle Betriebsart auch
• ein Parametrierungsbetrieb
unterscheidbar ist.

7. Reglerbaustein nach einem der vorhergehenden Patentansprüche,
**dadurch gekennzeichnet,**
**dass** bei der Information über die Art des aktuell verwendeten Sollwerts zumindest ein Betrieb mit einem durch einen Führungsregler vorgegebenen Sollwert und ein Betrieb mit einem alternativ vorgegebenem Sollwert unterscheidbar ist.

## Claims

1. Controller block (PID_Temp_1, PID_Temp_2, PID_Temp_3) for use in an industrial automation arrangement, wherein the controller block (PID_Temp_1, PID_Temp_2, PID_Temp_3) is designed for use with a number of controller blocks (PID_Temp_1, PID_Temp_2, PID_Temp_3) of the same type or having substantially the same function in a cascaded closed-loop control system, and
wherein the controller block (PID_Temp_1, PID_Temp_2, PID_Temp_3) is optionally configurable either as master controller, as follower controller or as master and follower controller in collaboration with other controllers of the cascaded closed-loop control system,
**characterized**
**in that** the controller block (PID_Temp_1, PID_Temp_2, PID_Temp_3) has a data interface for communication with other controller blocks (PID_Temp_1, PID_Temp_2, PID_Temp_3), wherein the data interface is designed at least for the exchange of information about
• a control output limiting,
• a present operating mode, and
• the type of currently used setpoint value at the operating time of the closed-loop control system,
wherein there is provision, on the basis of the information, for a restriction of the increase or a continuation of an integral component of the control parameters of the controller block.

2. Controller block according to one of the preceding patent claims,
**characterized**
**in that** the controller block (PID_Temp_1, PID_Temp_2, PID_Temp_3) is a software block for programming an industrial control system by means of an engineering system.

3. Controller block according to either of the preceding patent claims,
**characterized**
**in that** the controller block (PID_Temp_1, PID_Temp_2, PID_Temp_3) has a visual representation of a graphical user interface of an engineering system, wherein
the visual representation has elements for configuring the controller block (PID_Temp_1, PID_Temp_2, PID_Temp_3)
• as master controller,
• as follower controller, or
• as master and follower controller
and at least one selection option for selecting a further controller block (PID_Temp_1, PID_Temp_2, PID_Temp_3) linked to the controller block (PID_Temp_1, PID_Temp_2, PID_Temp_3).

4. Controller block according to Patent Claim 3, **characterized**
**in that** the visual representation has at least one linking option with process parameters of an industrial process.

5. Controller block according to one of the preceding patent claims,
**characterized**
**in that** the information about the present operating mode involves at least
• a closed-loop control mode and
• a manual mode
being distinguishable.

6. Controller block according to Patent Claim 5, **characterized**
**in that** the information about the present operating mode also involves
• a parameterization mode
being distinguishable.

7. Controller block according to one of the preceding patent claims,
**characterized**
**in that** the information about the type of currently used setpoint value involves at least a mode with a setpoint value prescribed by a master controller and a mode with a setpoint value prescribed alternatively being distinguishable.

## Revendications

1. Module (PID_Temp_1, PID_Temp_2, PID-Temp_3) de régulateur à utiliser dans un système d'automatisation industrielle, dans lequel le module (PID_Temp_1, PID_Temp_2, PID-Temp_3) de régulateur est conçu pour être utilisé dans une régulation en cascade avec un certain nombre de modules (PID_Temp_1, PID_Temp_2, PID-Temp_3) de régulateur de même type ou sensiblement de même fonction, et
dans lequel le module (PID_Temp_1, PID_Temp_2, PID-Temp_3) de régulateur peut être configuré au choix en régulateur de conduite, en régulateur de suivi ou en régulateur de conduite et de suivi, en coopération avec d'autres régulateurs de la régulation en cascade,
**caractérisé**
**en ce que** le module (PID_Temp_1, PID_Temp_2, PID-Temp_3) de régulateur a une interface de données pour la communication avec d'autres modules (PID_Temp_1, PID_Temp_2, PID-Temp_3) de régulateur,
dans lequel l'interface de données est conçu au moins pour l'échange d'informations par
• une limitation de valeur de réglage,
• un type de fonctionnement en cours, et
• le type de la valeur de consigne en utilisation en cours pour le temps de marche de la régulation,
dans lequel, en fonction des informations, il est prévu un étranglement de l'accroissement ou un arrêt d'une partie intégrale du paramètre de régulation du module de régulateur.

2. Module de régulateur suivant l'une des revendications précédentes,
**caractérisé**
**en ce que** le module (PID_Temp_1, PID_Temp_2, PID-Temp_3) de régulateur est un module de logiciel pour la programmation d'une commande industrielle au moyen d'un système d'ingénierie.

3. Module de régulateur suivant l'une des revendications précédentes,
**caractérisé**
**en ce que** le module (PID_Temp_1, PID_Temp_2, PID-Temp_3) de régulateur a une représentation visuelle pour une surface d'utilisateur graphique d'un système d'ingénierie, dans lequel la représentation visuelle a des éléments pour la configuration du module (PID_Temp_1, PID_Temp_2, PID-Temp_3) de régulateur
• comme régulateur de conduite,
• comme régulateur de suivi, ou
• comme régulateur de conduite et de suivi
et au moins une possibilité de sélection pour la sélection d'un autre module (PID_Temp_1, PID_Temp_2, PID-Temp_3) de régulateur combiné au module (PID_Temp_1, PID_Temp_2, PID-Temp_3) de régulateur.

4. Module de régulateur suivant la revendication 3, **caractérisé**
**en ce que** la représentation visuelle a au moins une possibilité de combinaison à des paramètres de processus d'un processus industriel.

5. Module de régulateur suivant l'une des revendications précédentes,
**caractérisé**
**en ce que**, dans l'information sur le type de fonctionnement en cours, on peut distinguer au moins entre
• un fonctionnement en régulation, et
• un fonctionnement manuel.

6. Module de régulateur suivant la revendication 5, **caractérisé**
**en ce que**, dans l'information sur le type de fonctionnement en cours, on peut distinguer aussi
• un fonctionnement en paramétrage.

7. Module de régulateur suivant l'une des revendications précédentes,
**caractérisé**
**en ce que**, dans l'information sur le type de la valeur de consigne en utilisation en cours, on peut distinguer au moins un fonctionnement ayant une valeur de consigne donnée à l'avance par un régulateur de conduite et un fonctionnement avec une autre valeur de consigne donnée à l'avance.
